# EUROPEAN PATENT SPECIFICATION

(11) **EP 3 447 599 B1**
(45) Date of publication and mention of the grant of the patent: **17.06.2020**
(21) Application number: 18189507.9
(22) Date of filing: 17.08.2018
(51) Int. Cl.: G05D 1/02

(54) **TIMED CLEANING METHOD, DEVICE AND STORAGE MEDIUM**
ZEITGESTEUERTES REINIGUNGSVERFAHREN, VORRICHTUNG UND SPEICHERMEDIUM
PROCÉDÉ DE NETTOYAGE TEMPORISÉ, DISPOSITIF ET SUPPORT DE STOCKAGE

(30) Priority: 17.08.2017 CN 201710708790
(43) Date of publication of application: 27.02.2019
(73) Proprietor: Beijing Xiaomi Mobile Software Co., Ltd., Beijing 100085 (CN)
(72) Inventor: XIA, Yongfeng, Beijing, Beijing 100085 (CN); WU, Ke, Beijing, Beijing 100085 (CN)
(74) Representative: dompatent von Kreisler Selting Werner - Partnerschaft von Patent- und Rechtsanwälten mbB

(56) References cited:
- WO-A1-2013/118974
- WO-A2-2017/079777
- SCHMIDT G ET AL: "An advanced planning and navigation approach for autonomous cleaning robot operations", INTELLIGENT ROBOTS AND SYSTEMS, 1998. PROCEEDINGS., 1998 IEEE/RSJ INTE RNATIONALCONFERENCE ON, IEEE, vol. 2, 13 October 1998 (1998-10-13), pages 1230-1235, XP010311555, DOI: 10.1109/IROS.1998.727467 ISBN: 978-0-7803-4465-5

## Description

### TECHNICAL FIELD

The present invention relates to the field of data processing technology, and in particular to a timed cleaning method, device and storage medium.

### BACKGROUND

With the rapid development of science and technology, more and more intelligent living appliances have entered thousands of families, and greatly improve comfort and convenience of people's life. For example, in order to reduce the amount of labor to clean rooms, more and more people choose to use cleaning robots to clean the rooms.

In the related art, in order to avoid furnishings in a room, a cleaning robot may scan a region to be cleaned by means of infrared, ultrasonic or other means to obtain information about furnishings that appear in a cleaning path. When the cleaning robot encounters the furnishings in the process of cleaning the room, the cleaning robot may turn automatically to avoid collisions with the furnishings in the process of cleaning.

SCHMIDT G ET AL: "An advanced planning and navigation approach for autonomous cleaning robot operations", INTELLIGENT ROBOTS AND SYSTEMS, 1998. PROCEEDINGS., 1998 IEEE/RSJ INTERNATIONALCONFERENCE ON, IEEE, vol. 2, 13 October 1998 (1998-10-13, pages 1230-1235 relates to control and navigation method for a cleaning robot, wherein in case of unexpected obstacles the robot updates its internal geometric representation of the work area to be processed and replans its path. However, due to obstacle avoidance, certain areas may remain unprocessed. Locations and topology of such areas are automatically constructed for repeated follow-up floor caring in case of temporary obstacles.

WO 2013/118974 relates a method for operating a robotic cleaner including generating at least one map including information regarding a space to be cleaned by using information measured by at least one sensor. The operation also includes setting a cleaning path by using the at least one map, and cleaning according to the cleaning path.

### SUMMARY

In order to overcome the problem existing in the related art, embodiments of the present invention provide a timed cleaning method, device and storage medium. The technical solutions are as follows.

According to a first aspect of the embodiments of the present invention, there is provided a timed cleaning method, including:
obtaining a topographic map of a cleaning region, where the topographic map identifies an obstacle in the cleaning region;
according to the topographic map, determining an unclean region in the cleaning region, which is occupied by the obstacle and is unable to be cleaned;
detecting the unclean region according to a preset time interval to determine whether the obstacle placed on the unclean region is removed away; and
when detecting that the obstacle placed on the unclean region is removed away, cleaning the unclean region.

The technical solution in this embodiment of the present invention may have the following beneficial effects: when encountering an obstacle in a region in the process of cleaning, the region may be marked as an unclean region, and the unclean region may be detected regularly. Until it is detected that the obstacle is removed away, the unclean region occupied by the obstacle is cleaned, thereby increasing flexibility in cleaning the room, ensuring the cleaning quality and then improving user experience.

The method further includes: determining whether the obstacle is a temporary furniture according to a bottom area of the obstacle. Detecting the unclean region according to the preset time interval, includes: when the obstacle is the temporary furniture, detecting the unclean region according to the preset time interval.

The technical solution in this embodiment of the present invention may have the following beneficial effects: when encountering an obstacle in a region in the process of cleaning, the region may be marked as an unclean region, and the unclean region may be detected regularly when the obstacle is a temporary furniture. Until it is detected that the obstacle is removed away, the unclean region occupied by the obstacle is cleaned, thereby avoiding ineffective detection of the unclean region, increasing flexibility in cleaning the room, ensuring the cleaning quality and then improving user experience.

In one embodiment, determining whether the obstacle is the temporary furniture according to the bottom area of the obstacle, includes: determining whether or not the bottom area of the obstacle is smaller than or equal to a preset area threshold; and, when the bottom area of the obstacle is smaller than or equal to the preset area threshold, confirming the obstacle as the temporary furniture.

The technical solution in this embodiment of the present invention may have the following beneficial effects: the furniture property of the obstacle may be determined according to the size of the obstacle, thereby improving convenience and accuracy of determination of the furniture property.

In one embodiment, determining whether the obstacle is the temporary furniture according to the bottom area of the obstacle, includes: obtaining information about a furniture represented by the obstacle according to the bottom area of the obstacle; and, determining a furniture property of the obstacle according to a correspondence relationship between furniture and furniture properties, where the furniture properties indicate a temporary furniture and a fixed furniture.

The technical solution in this embodiment of the present invention may have the following beneficial effects: the furniture property of the obstacle may be determined according to a correspondence relationship between furniture and furniture properties, thereby improving convenience and accuracy of determination of the furniture property.

In one embodiment, the method further includes: after the unclean region has been cleaned, marking the unclean region as a cleaned region.

The technical solution in this embodiment of the present invention may have the following beneficial effects: after the unclean region has been cleaned, the unclean region may be marked as a cleaned region, thereby avoiding detection of the unclean region again which extends working time of the cleaning robot.

According to a second aspect of the embodiments of the present invention, there is provided a timed cleaning device, including:
an obtaining module configured to obtain a topographic map of a cleaning region, where the topographic map identifies an obstacle in the cleaning region;
a first determining module configured to, according to the topographic map, determine an unclean region in the cleaning region, which is occupied by the obstacle and is unable to be cleaned;
a detecting module configured to detect the unclean region according to a preset time interval to determine whether the obstacle placed on the unclean region is removed away; and
a cleaning module configured to, when detecting that the obstacle placed on the unclean region is removed away, clean the unclean region.

The device further includes: a second determining module configured to determine whether the obstacle is a temporary furniture according to a bottom area of the obstacle. The detecting module includes: a detecting sub-module configured to, when the obstacle is the temporary furniture, detect the unclean region according to the preset time interval.

In one embodiment, the second determining module includes:
a first determining sub-module configured to determine whether or not the bottom area of the obstacle is smaller than or equal to a preset area threshold; and
a confirming sub-module configured to, when the bottom area of the obstacle is smaller than or equal to the preset area threshold, confirm the obstacle as the temporary furniture.

In one embodiment, the second determining module includes:
an obtaining sub-module configured to obtain information about a furniture represented by the obstacle according to the bottom area of the obstacle; and
a second determining sub-module configured to determine a furniture property of the obstacle according to a correspondence relationship between furniture and furniture properties, where the furniture properties indicate a temporary furniture and a fixed furniture.

In one embodiment, the device further includes: a marking module configured to, after the unclean region has been cleaned, mark the unclean region as a cleaned region.

According to a third aspect of one embodiment of the present invention, there is provided a timed cleaning device, including:
a processor, and
a memory storing instructions executable by the processor,
wherein the processor is configured to:
obtain a topographic map of a cleaning region, where the topographic map identifies an obstacle in the cleaning region;
according to the topographic map, determine an unclean region in the cleaning region, which is occupied by the obstacle and is unable to be cleaned;
detect the unclean region according to a preset time interval to determine whether the obstacle placed on the unclean region is removed away; and
when detecting that the obstacle placed on the unclean region is removed away, clean the unclean region.

According to a fourth aspect of the embodiments of the present invention, there is provided a computer-readable storage medium including a set of instructions stored therein, which when executed by a processor, causes the processor to perform steps of the method of any embodiment according to the first aspect.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1a is a flow chart showing a timed cleaning method according to an exemplary embodiment.
Fig. 1b is a flow chart showing a timed cleaning method according to an exemplary embodiment.
Fig. 1c is a flow chart showing a timed cleaning method according to an exemplary embodiment.
Fig. 1d is a flow chart showing a timed cleaning method according to an exemplary embodiment.
Fig. 2 is a flow chart showing a timed cleaning method according to an exemplary embodiment.
Fig. 3 is a flow chart showing a timed cleaning method according to an exemplary embodiment.
Fig. 4a is a schematic diagram illustrating a structure of a timed cleaning device according to an exemplary embodiment.
Fig. 4b is a schematic diagram illustrating a structure of a timed cleaning device according to an exemplary embodiment.
Fig. 4c is a schematic diagram illustrating a structure of a timed cleaning device according to an exemplary embodiment.
Fig. 4d is a schematic diagram illustrating a structure of a timed cleaning device according to an exemplary embodiment.
Fig. 4e is a schematic diagram illustrating a structure of a timed cleaning device according to an exemplary embodiment.
Fig. 5 is a block diagram illustrating a structure of a timed cleaning device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise indicated. The implementations set forth in the following description of exemplary embodiments do not represent all implementations consistent with the invention. Instead, they are merely examples of devices and methods consistent with aspects related to the invention as recited in the appended claims.

The technical solution provided in one embodiment of the present invention relates to a cleaning robot which may be connected with a terminal through infrared, bluetooth or wireless communication networks. In the related art, when the cleaning robot encounters an obstacle in the process of cleaning a room, the cleaning robot will bypass the obstacle to clean regions around the obstacle. However, due to a user's activity in the room, furniture such as a stool or a garbage bin may be temporarily placed on the floor. If the cleaning robot bypasses the stool or the garbage bin when encountering the stool or the garbage bin, the floor temporarily occupied by the stool or the garbage bin is unable to be cleaned, and thus the user experience is not good. In the technical solution of one embodiment of the present invention, when encountering an obstacle in a region in the process of cleaning, the region may be marked as an unclean region, and then the unclean region is detected regularly. Until it is detected that the obstacle is removed away, the unclean region occupied by the obstacle is cleaned, thereby increasing flexibility in cleaning the room, ensuring the cleaning quality and then improving user experience.

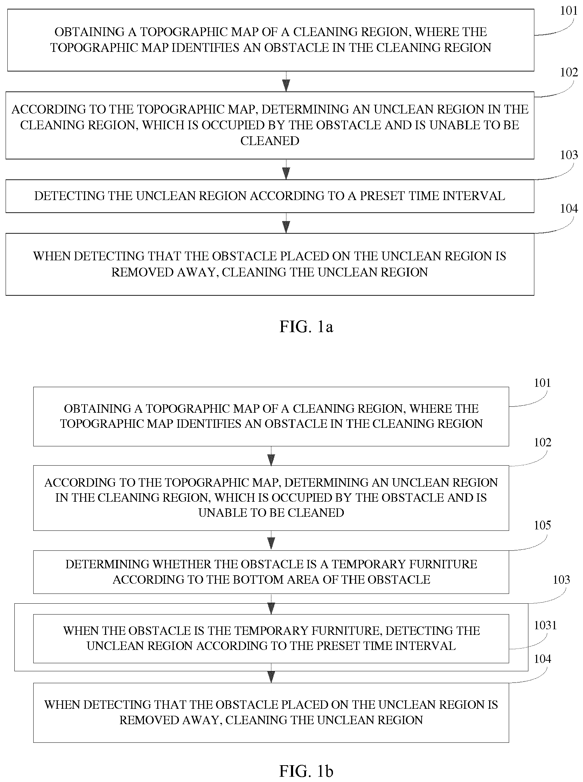

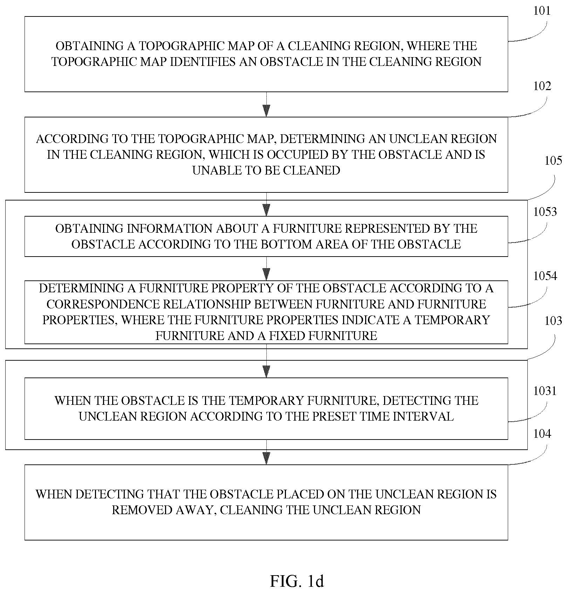

Fig. 1a is a flow chart showing a timed cleaning method according to an exemplary embodiment, and this method is applied to a cleaning robot. As shown in Fig. 1a, the timed cleaning method includes the following steps 101 to 104.

The step 101 is to obtain a topographic map of a cleaning region, where the topographic map identifies an obstacle in the cleaning region.

For example, when the cleaning robot cleans a room, the cleaning robot may encounter several obstacles, such as an edge or a supporting portion of a piece of furniture. When detecting an obstacle, the obstacle can be marked in a topographic map of the room according to a bottom area of the obstacle. Specifically, in the process of cleaning the room, the cleaning robot may identify an encountered obstacle by means of the path obstacle avoidance function, and then scan the obstacle through a sensor mounted in the cleaning robot itself, to determine a relative size ratio of the obstacle to the cleaning robot. Further, according to the size of the cleaning robot, a contact area between the obstacle and the cleaning robot, i.e., the bottom area of the obstacle, may be obtained. Then, the obstacle may be marked in the topographic map of the room according to the bottom area of the obstacle. The topographic map of the room is the topographic map of the cleaning region for the cleaning robot.

The step 102 is to, according to the topographic map, determine an unclean region in the cleaning region, which is occupied by the obstacle and is unable to be cleaned.

For example, after obtaining the topographic map in which an obstacle is identified, the cleaning robot may obtain information about a region which is occupied by the obstacle according to the topographic map, and then set the region as an unclean region.

When the topographic map identifies several obstacles, the region which is occupied by each of the obstacles can be set as the unclean region. In other words, information about several unclean regions can be obtained according to the topographic map, and each of the uncleaned regions may be processed according to the method of the embodiment of the present invention.

Or, after obtaining the topographic map in which several obstacles are identified, the cleaning robot may determine in turn whether or not the bottom area of each obstacle is smaller than or equal to a preset threshold, and then set a region occupied by the obstacle of which the bottom area is smaller than or equal to the preset threshold as the unclean region. The region occupied by the obstacle of which the bottom area is greater than the preset threshold is not marked.

The step 103 is to detect the unclean region according to a preset time interval.

For example, the preset time interval may be set in the cleaning robot. In actual application, the preset time interval may be set according to specific conditions, which is not limited herein.

After obtaining information about the unclean region, the cleaning robot may detect the unclean region at every preset time interval to determine whether the obstacle placed on the unclean region is removed away. Specifically, it is assumed that the preset time interval is 10 minutes, then, after obtaining information about the unclean region, the cleaning robot may run to the unclean region at every 10 minutes and determine whether the obstacle placed on the unclean region is removed away by means of the path obstacle avoidance function, i.e., determining whether there exists an obstacle on the unclean region by means of the path obstacle avoidance function. If not, it means that the obstacle has been removed away.

When the cleaning robot obtains information about several unclean regions according to the topographic map, the cleaning robot may detect in turn the unclean regions at every preset time interval to determine whether the obstacle placed on each of the unclean region is removed away.

The step 104 is to, when detecting that the obstacle placed on the unclean region is removed away, clean the unclean region.

For example, when the cleaning robot detects that the obstacle placed on the unclean region is removed away, i.e., the cleaning robot detects no obstacle when the cleaning robot runs to the unclean region, the cleaning function of the cleaning robot may be turned on to clean the unclean region, thereby ensuring a thorough cleaning of the room.

Specifically, after the unclean region has been cleaned, the unclean region may be marked as a cleaned region, thereby avoiding detection of the unclean region again which extends working time of the cleaning robot.

In the technical solution of one embodiment of the present invention, when encountering an obstacle in a region in the process of cleaning, the region may be marked as an unclean region, and then the unclean region is detected regularly. Until it is detected that the obstacle is removed away, the unclean region occupied by the obstacle is cleaned, thereby increasing flexibility in cleaning the room, ensuring the cleaning quality and then improving user experience.

In one embodiment, as shown in Fig. 1b, the method further includes step 105.

The step 105 is to determine whether the obstacle is a temporary furniture according to the bottom area of the obstacle.

The step 103 of detecting the unclean region according to the preset time interval may be implemented by means of a step 1031.

The step 1031 is to, when the obstacle is a temporary furniture, detect the unclean region according to the preset time interval.

For example, in the process that the cleaning robot cleans the room, there may be several obstacles, some of which are fixed obstacles such as an edge or a supporting portion of a large furniture, and some of which may be temporary obstacles such as a stool leg or a garbage bin. The possibility of moving one fixed obstacle in a short time is very small, and a position of one temporary obstacle may be changed at any time depending on a user's activity in the room. Thus, after the cleaning robot marks the region occupied by the obstacle identified in the topographic map as the unclean region, the cleaning robot may first determine whether the obstacle placed on the unclean region is a temporary furniture. When the obstacle placed on the unclean region is a temporary furniture, the cleaning robot may detect the unclean region at every preset time interval to determine whether the obstacle placed on the unclean region is removed away. After the obstacle placed on the unclean region is removed away, the cleaning robot cleans the unclean region. When the obstacle placed on the unclean region is a fixed furniture, the cleaning robot may mark the unclean region as a fixed region, and then the cleaning robot may bypass the fixed region without detection in the cleaning process, thereby saving cleaning resources of the cleaning robot.

When there are several unclean regions determined by the cleaning robot, the cleaning robot may determine in turn whether the obstacle placed on each unclean region is a temporary furniture, and then detect in turn the unclean regions where the temporary furniture are placed according to the preset time interval. Further, the cleaning robot marks the unclean region where the fixed furniture is placed as the fixed region, thereby avoiding repeated detection.

For example, after the cleaning robot obtains the topographic map in which several obstacles are identified, the cleaning robot may send the topographic map to a terminal. After receiving the topographic map, the terminal displays the topographic map and prompts the user to view the topographic map. The user may set a furniture property or attribute for each obstacle on the terminal according to specific conditions. The furniture property indicates a fixed furniture or a temporary furniture. The terminal generates property information according to the user's settings, and sends the property information to the cleaning robot. The property information includes the furniture property or attribute of each obstacle. Then the cleaning robot may determine the furniture property of the obstacle placed on each unclean region according to the property information.

In the technical solution of one embodiment of the present invention, when encountering an obstacle in a region in the process of cleaning, the region may be marked as an unclean region, and the unclean region may be detected regularly when the obstacle is a temporary furniture. Until it is detected that the obstacle is removed away, the unclean region occupied by the obstacle is cleaned, thereby avoiding ineffective detection of the unclean region, increasing flexibility in cleaning the room, ensuring the cleaning quality and then improving user experience.

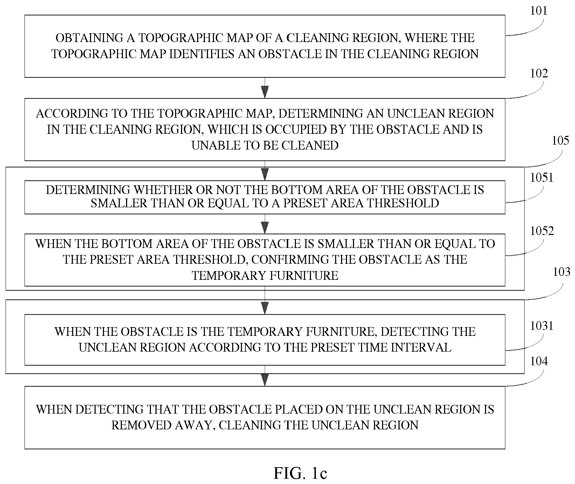

In one embodiment, as shown in Fig. 1c, the step 105 of determining whether the obstacle is a temporary furniture according to the bottom area of the obstacle may be implemented by means of steps 1051 and 1052.

The step 1051 is to determine whether or not the bottom area of the obstacle is smaller than or equal to a preset area threshold.

The step 1052 is to, when the bottom area of the obstacle is smaller than or equal to the preset area threshold, confirm the obstacle as the temporary furniture.

Generally, the large furniture placed in the room are substantially floor furniture having a large contact area with the ground and a small possibility of being moved; the temporary furniture has a smaller contact area with the ground, and may change its position depending on the user's activity in the room. Thus, the cleaning robot may determine whether the obstacle is a temporary furniture according to the bottom area of the obstacle.

For example, when initialized, the preset area threshold may be set in advance in the cleaning robot. After determining the unclean region, the cleaning robot may first obtain the bottom area of the obstacle placed on the unclean region, i.e., the contact area between the obstacle and the ground, and determine whether or not the bottom area of the obstacle is smaller than or equal to the preset area threshold. When the bottom area of the obstacle is smaller than or equal to the preset area threshold, it means that the obstacle placed on the unclean region is a temporary furniture. The cleaning robot may detect the unclean region at every preset time interval. After the obstacle is removed away, the cleaning robot cleans the unclean region. When the bottom area of the obstacle is greater than the preset area threshold, it means that the obstacle placed on the unclean region is a fixed furniture. The cleaning robot may mark the unclean region as a fixed region, and ignore the fixed region in the subsequent cleaning process. In actual application, the preset area threshold may be set according to specific conditions, which is not limited herein.

The technical solution in this embodiment of the present invention may have the following beneficial effects: the furniture property of the obstacle may be determined according to the size of the obstacle, thereby improving convenience and accuracy of determination of the furniture property.

In one embodiment, as shown in Fig. Id, the step 105 of determining whether the obstacle is a temporary furniture according to the bottom area of the obstacle may be implemented by means of steps 1053 and 1054.

The step 1053 is to obtain information about a furniture represented by the obstacle according to the bottom area of the obstacle.

The step 1054 is to determine a furniture property of the obstacle according to a correspondence relationship between furniture and furniture properties, where the furniture properties indicate a temporary furniture and a fixed furniture.

For example, after the cleaning robot obtains the topographic map in which several obstacles are identified, the cleaning robot may classify the obstacles according to the bottom areas of the obstacles. For example, when the bottom area of an obstacle is smaller than or equal to a first preset threshold, the obstacle is determined as a first obstacle. When the bottom area of an obstacle is greater than or equal to a second preset threshold, the obstacle is determined as a second obstacle. It is assumed that N first obstacles and M second obstacles are obtained according to the above classification method, where N and M are integers which are greater than or equal to 0. Since the bottom area of the first obstacle is smaller, the first obstacle may be referred to a supporting portion of a furniture, such as a table leg, a stool leg or a sofa leg. According to positions of the N first obstacles, distances among the first obstacles may be obtained, and then S furniture represented by the N first obstacles may be obtained. Since the bottom area of the second obstacle is larger, the second obstacle may be referred to the floor furniture, such as a floor bed, a floor tea table or a floor stool. According to the bottom areas of the M second obstacles, M furniture represented by the M second obstacles may be obtained.

When initialized, the correspondence relationship between furniture and furniture properties may be set in the cleaning robot. The correspondence relationship illustrates furniture properties of different furniture, and the different furniture may be classified into the fixed furniture or the temporary furniture according to the properties. After the cleaning robot obtains information about the S+M furniture placed in the room, the cleaning robot may obtain the furniture properties of the S+M furniture according to the correspondence relationship. For example, it is assumed that the cleaning robot determines that three piece of furniture including a bed, a large wardrobe and a stool are placed in the room according to the bottom areas of the several obstacles. As can be learned by querying the correspondence relationship between furniture and furniture properties, the furniture properties of the bed and the large wardrobe indicate the fixed furniture, and the furniture property of the stool indicates the temporary furniture. The cleaning robot may mark unclean regions where the bed and the large wardrobe are placed as fixed regions, and detect the unclean region where the stool is placed at every preset time interval.

In the technical solution in this embodiment of the present invention, the furniture property of the obstacle may be determined according to a correspondence relationship between furniture and furniture properties, thereby improving convenience and accuracy of determination of the furniture property.

In actual application, the method may be implemented by a terminal. The terminal may be a phone, a tablet computer, a smart watch or other device that is capable of connecting with the cleaning robot, which is not limited herein. The terminal may be connected with the cleaning robot through infrared, bluetooth or wireless communication networks.

After the cleaning robot obtains the topographic map, the cleaning robot may send the topographic map to the terminal. The terminal determines the unclean region in the cleaning region, which is occupied by the obstacle and is unable to be cleaned, according to the topographic map. The terminal then generates a first operation instruction and sends the first operation instruction to the cleaning robot. The first operation instruction instructs the cleaning robot to detect the unclean region according to the preset time interval and clean the unclean region when detecting that the obstacle placed on the unclean region is removed away.

Or, after the terminal receives from the cleaning robot the topographic map in which several obstacles are identified, the terminal marks the regions which are occupied by the obstacles and are unable to be cleaned as unclean regions, i.e., several unclean regions are determined according to the topographic map. Then, the terminal determines in turn whether the obstacle placed on each unclean region is a temporary furniture to obtain a determination result, and generates a second operation instruction according to the determination result. Then, the terminal sends the second operation instruction to the cleaning robot. The second operation instruction instructs the cleaning robot to detect the unclean region where the temporary furniture is placed according to the preset time interval. Specifically, the terminal may determine whether the obstacle placed on each unclean region is a temporary furniture according to the user's settings, according to the bottom area of the obstacle, or according to the furniture represented by the obstacle, which are not limited herein.

Hereinafter, implementation processes will be described in details with reference to several examples.

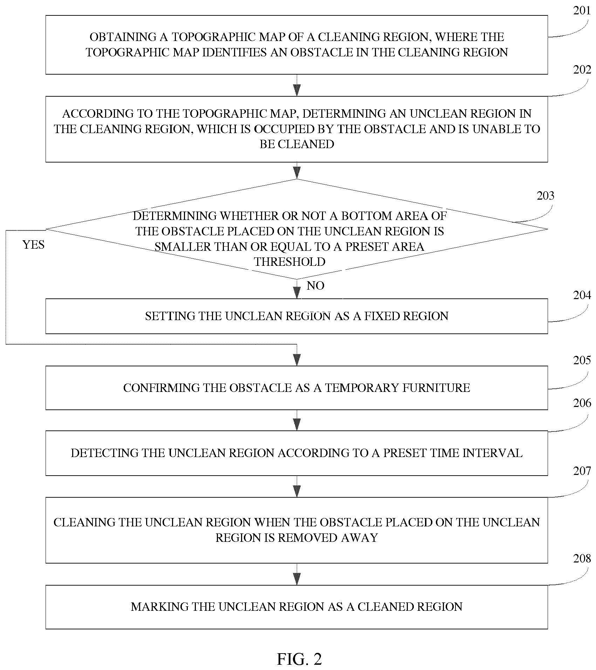

Fig. 2 is a flow chart showing a timed cleaning method according to an exemplary embodiment, and this method may be implemented by a cleaning robot. As shown in Fig. 2, the method includes the following steps 201 to 208.

The step 201 is to obtain a topographic map of a cleaning region, where the topographic map identifies an obstacle in the cleaning region, and perform the step 202.

The step 202 is to, according to the topographic map, determine an unclean region in the cleaning region, which is occupied by the obstacle and is unable to be cleaned, and perform the step 203.

The step 203 is to, determine whether or not a bottom area of the obstacle placed on the unclean region is smaller than or equal to a preset area threshold; when the bottom area of the obstacle is greater than the preset area threshold, perform the step 204; and when the bottom area of the obstacle is smaller than or equal to the preset area threshold, perform the step 205.

The step 204 is to set the unclean region as a fixed region and end the process.

The step 205 is to confirm the obstacle as a temporary furniture, and perform the step 206.

The step 206 is to detect the unclean region according to a preset time interval, and perform the step 207.

The step 207 is to clean the unclean region when the obstacle placed on the unclean region is removed away, and perform the step 208.

The step 208 is to mark the unclean region as a cleaned region.

According to the timed cleaning method of this embodiment of the present invention, when encountering an obstacle in a region in the process of cleaning, the region may be marked as an unclean region, and then the unclean region is detected regularly. Until it is detected that the obstacle is removed away, the unclean region occupied by the obstacle is cleaned, thereby increasing flexibility in cleaning the room, ensuring the cleaning quality and then improving user experience.

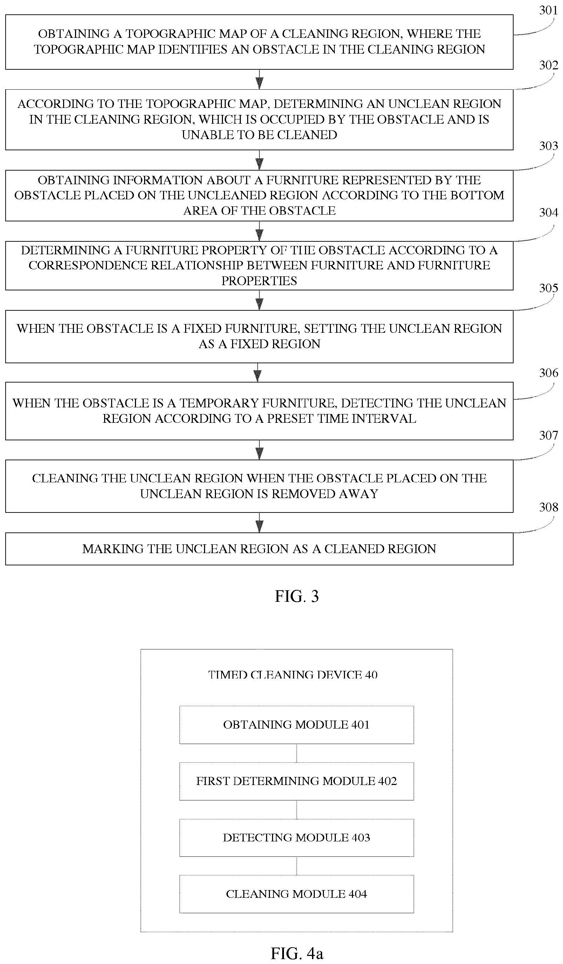

Fig. 3 is a flow chart showing a timed cleaning method according to an exemplary embodiment, and this method may be implemented by a cleaning robot. As shown in Fig. 3, the method includes the following steps 301 to 308.

The step 301 is to obtain a topographic map of a cleaning region, where the topographic map identifies an obstacle in the cleaning region, and perform the step 302.

The step 302 is to, according to the topographic map, determine an unclean region in the cleaning region, which is occupied by the obstacle and is unable to be cleaned, and perform the step 303.

The step 303 is to obtain information about a furniture represented by the obstacle placed on the uncleaned region according to the bottom area of the obstacle, and perform the step 304.

The step 304 is to determine a furniture property or attribute of the obstacle according to a correspondence relationship between furniture and furniture properties, and perform the step 305.

The step 305 is to, when the obstacle is a fixed furniture, set the unclean region as a fixed region and end the process.

The step 306 is to, when the obstacle is a temporary furniture, detect the unclean region according to a preset time interval, and perform the step 307.

The step 307 is to clean the unclean region when the obstacle placed on the unclean region is removed away, and perform the step 308.

The step 308 is to mark the unclean region as a cleaned region.

According to the timed cleaning method of this embodiment of the present invention, when encountering an obstacle in a region in the process of cleaning, the region may be marked as an unclean region, and then the unclean region is detected regularly. Until it is detected that the obstacle is removed away, the unclean region occupied by the obstacle is cleaned, thereby increasing flexibility in cleaning the room, ensuring the cleaning quality and then improving user experience.

Hereinafter, device embodiments of the present invention are described and may be used to implement the method embodiments of the present invention.

Fig. 4a is a schematic diagram illustrating a structure of a timed cleaning device 40 according to an exemplary embodiment. The device 40 may be implemented as part or all of an electronic apparatus through software, hardware or a combination thereof. As shown in Fig. 4a, the timed cleaning device 40 includes an obtaining module 401, a first determining module 402, a detecting module 403 and a cleaning module 404.

The obtaining module 401 is configured to obtain a topographic map of a cleaning region, where the topographic map identifies an obstacle in the cleaning region.

The first determining module 402 is configured to, according to the topographic map, determine an unclean region in the cleaning region, which is occupied by the obstacle and is unable to be cleaned.

The detecting module 403 is configured to detect the unclean region according to a preset time interval.

The cleaning module 404 is configured to, when detecting that the obstacle placed on the unclean region is removed away, clean the unclean region.

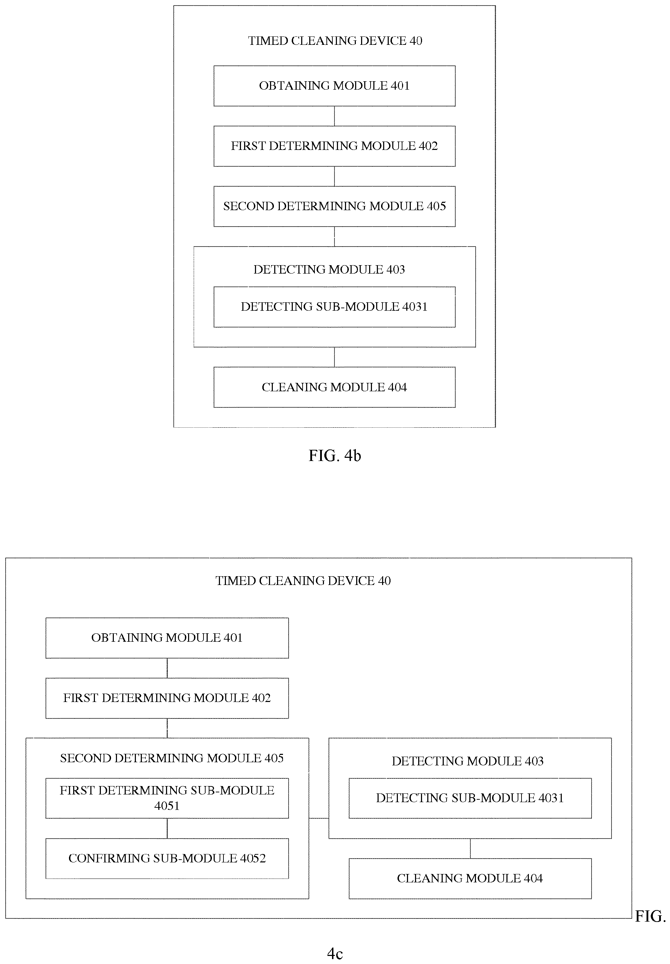

In one embodiment, as shown in Fig. 4b, the device 40 further includes a second determining module 405, and the detecting module 403 includes a detecting sub-module 4031.

The second determining module 405 is configured to determine whether the obstacle is a temporary furniture according to the bottom area of the obstacle.

The detecting sub-module 4031 is configured to, when the obstacle is the temporary furniture, detect the unclean region according to the preset time interval.

In one embodiment, as shown in Fig. 4c, the second determining module 405 includes a first determining sub-module 4051 and a confirming sub-module 4052.

The first determining sub-module 4051 is configured to determine whether or not the bottom area of the obstacle is smaller than or equal to a preset area threshold.

The confirming sub-module 4052 is configured to, when the bottom area of the obstacle is smaller than or equal to the preset area threshold, confirm the obstacle as the temporary furniture.

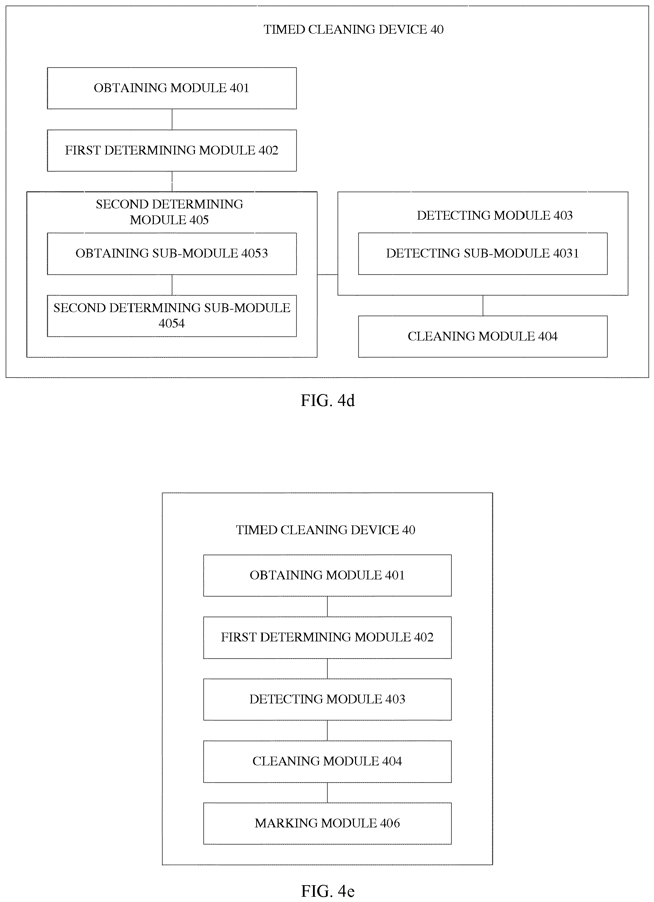

In one embodiment, as shown in Fig. 4d, the second determining module 405 includes an obtaining sub-module 4053 and a second determining sub-module 4054.

The obtaining sub-module 4053 is configured to obtain information about a furniture represented by the obstacle according to the bottom area of the obstacle.

The second determining sub-module 4054 is configured to determine a furniture property or attribute of the obstacle according to a correspondence relationship between furniture and furniture properties, where the furniture properties indicate a temporary furniture and a fixed furniture.

In one embodiment, as shown in Fig. 4e, the device 40 further includes a marking module 406. The marking module 406 is configured to, after the unclean region has been cleaned, mark the unclean region as a cleaned region.

According to the timed cleaning device of this embodiment of the present invention, when encountering an obstacle in a region in the process of cleaning, the region may be marked as an unclean region, and then the unclean region is detected regularly. Until it is detected that the obstacle is removed away, the unclean region occupied by the obstacle is cleaned, thereby increasing flexibility in cleaning the room, ensuring the cleaning quality and then improving user experience.

According to an exemplary embodiment, there is provided a timed cleaning device, including:
a processor, and
a memory storing instructions executable by the processor.

The processor is configured to:
obtain a topographic map of a cleaning region, where the topographic map identifies an obstacle in the cleaning region;
according to the topographic map, determine an unclean region in the cleaning region, which is occupied by the obstacle and is unable to be cleaned;
detect the unclean region according to a preset time interval; and
when detecting that the obstacle placed on the unclean region is removed away, clean the unclean region.

In one embodiment, the processor is further configured to determine whether the obstacle is a temporary furniture according to the bottom area of the obstacle; and when the obstacle is the temporary furniture, detect the unclean region according to the preset time interval.

In one embodiment, the processor is further configured to determine whether or not the bottom area of the obstacle is smaller than or equal to a preset area threshold; and when the bottom area of the obstacle is smaller than or equal to the preset area threshold, confirm the obstacle as the temporary furniture.

In one embodiment, the processor is further configured to obtain information about a furniture represented by the obstacle according to the bottom area of the obstacle; and determine a furniture property of the obstacle according to a correspondence relationship between furniture and furniture properties, where the furniture properties indicate a temporary furniture and a fixed furniture.

In one embodiment, the processor is further configured to, after the unclean region has been cleaned, mark the unclean region as a cleaned region.

According to the timed cleaning device of this embodiment of the present invention, when encountering an obstacle in a region in the process of cleaning, the region may be marked as an unclean region, and then the unclean region is detected regularly. Until it is detected that the obstacle is removed away, the unclean region occupied by the obstacle is cleaned, thereby increasing flexibility in cleaning the room, ensuring the cleaning quality and then improving user experience.

With respect to the device in the above embodiments, the specific manners for performing operations in individual modules therein have been described in detail in the embodiments regarding the related methods and will not be elaborated herein.

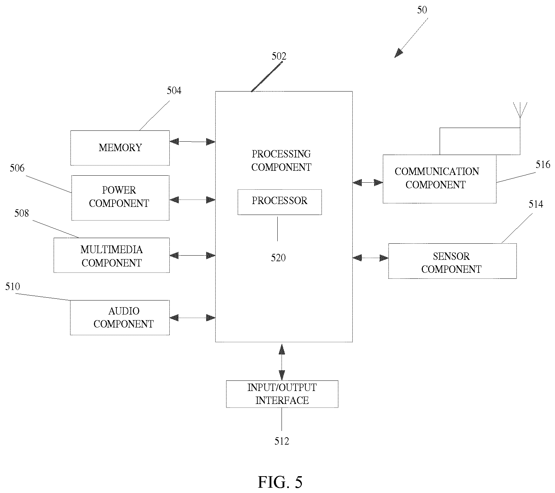

Fig. 5 is a block diagram illustrating a structure of a timed cleaning device 50 according to an exemplary embodiment, and this device may be applied to a terminal device. For example, the device 50 may be a mobile phone, a message transceiver, a tablet computer, smart home appliances or the like.

The device 50 may include one or more of the following components: a processing component 502, a memory 504, a power component 506, a multimedia component 508, an audio component 510, an input/output (I/O) interface 512, a sensor component 514 and a communication component 516.

The processing component 502 typically controls overall operations of the device 50, such as the operations associated with display, phone calls, data communications, camera operations and recording operations. The processing component 502 may include one or more processors 520 to execute instructions to perform all or part of the steps in the above described methods. Moreover, the processing component 502 may include one or more modules which facilitate the interaction between the processing component 502 and other components. For example, the processing component 502 may include a multimedia module to facilitate the interaction between the multimedia component 508 and the processing component 502.

The memory 504 is configured to store various types of data to support operations of the device 50. Examples of such data include instructions for any applications or methods operated on the device 50, contact data, phonebook data, messages, pictures, video, etc. The memory 504 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 50. The power component 506 may include a power supply management system, one or more power sources, and any other components associated with the generation, management, and distribution of power in the device 50.

The multimedia component 508 includes a screen providing an output interface between the device 50 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and/or the rear camera may receive an external multimedia datum while the device 50 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the device 50 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 50. For instance, the sensor component 514 may detect an open/closed status of the device 50, relative positioning of components, e.g., the display and the keypad, of the device 50, a change in position of the device 50 or a component of the device 50, a presence or absence of user's contact with the device 50, an orientation or an acceleration/deceleration of the device 50, and a change in temperature of the device 50. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor or a temperature sensor.

The communication component 516 is configured to facilitate communication, wired or wirelessly, between the device 50 and other devices. The device 50 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 50 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an exemplary embodiment, there is also provided a non-transitory computer-readable storage medium including instructions, such as included in the memory 504, executable by the processor 520 in the device 50, for performing the above-described methods. For example, the non-transitory computer-readable storage medium may be a ROM, a RAM, a CD-ROM, a magnetic tape, a floppy disc, an optical data storage device, and the like.

In an exemplary embodiment, there is also provided a non-transitory computer-readable storage medium including instructions, executable by the processor in the device 50, for performing the above-described timed cleaning methods. The method includes:
obtaining a topographic map of a cleaning region, where the topographic map identifies an obstacle in the cleaning region;
according to the topographic map, determining an unclean region in the cleaning region, which is occupied by the obstacle and is unable to be cleaned;
detecting the unclean region according to a preset time interval; and
when detecting that the obstacle placed on the unclean region is removed away, cleaning the unclean region.

In one embodiment, the method further includes determining whether the obstacle is a temporary furniture according to the bottom area of the obstacle. Detecting the unclean region according to a preset time interval, includes: when the obstacle is a temporary furniture, detecting the unclean region according to the preset time interval.

In one embodiment, determining whether the obstacle is a temporary furniture according to the bottom area of the obstacle, includes: determining whether or not the bottom area of the obstacle is smaller than or equal to a preset area threshold; and when the bottom area of the obstacle is smaller than or equal to the preset area threshold, confirming the obstacle as the temporary furniture.

In one embodiment, determining whether the obstacle is a temporary furniture according to the bottom area of the obstacle, includes: obtaining information about a furniture represented by the obstacle according to the bottom area of the obstacle; and determining a furniture property of the obstacle according to a correspondence relationship between furniture and furniture properties, where the furniture properties indicate a temporary furniture and a fixed furniture.

In one embodiment, the method further includes: after the unclean region has been cleaned, marking the unclean region as a cleaned region.

## Claims

1. A timed cleaning method comprising:
obtaining (101) a topographic map of a cleaning region, wherein the topographic map identifies an obstacle in the cleaning region;
based on the topographic map, determining (102) an unclean region in the cleaning region, wherein the unclean region is occupied by the obstacle;
**characterised by**:
detecting (103) the unclean region regularly according to a preset time interval to determine whether the obstacle placed on the unclean region is removed away; and
if it is detected that the obstacle at the unclean region is removed, cleaning (104) the unclean region,
wherein the method, further comprising:
determining (105) whether the obstacle is temporary based on a bottom area of the obstacle;
wherein the detecting (103) of the unclean region according to the preset time interval to determine whether the obstacle placed on the unclean region is removed away comprises: if the obstacle is temporary, detecting (1031) the unclean region according to the preset time interval to determine whether the obstacle placed on the unclean region is removed away.

2. The method of claim 1, wherein the determining (105) whether the obstacle is temporary based on the bottom area of the obstacle comprises:
determining (1051) whether or not the bottom area of the obstacle is smaller than or equal to a preset area threshold; and
if the bottom area of the obstacle is smaller than or equal to the preset area threshold, confirming (1052) the obstacle as the temporary.

3. The method of claim 1, wherein the determining (105) whether the obstacle is temporary based on the bottom area of the obstacle comprises:
obtaining (1053) information about the obstacle according to the bottom area of the obstacle; and
determining (1054) an attribute of the obstacle according to a correspondence relationship between obstacles and obstacle attributes, wherein the obstacle attributes indicate whether the obstacles are temporary or fixed.

4. The method of any one of claims 1 to 3, further comprising:
after the unclean region has been cleaned, marking the unclean region as a cleaned region.

5. A timed cleaning device (40) comprising:
an obtaining module (401) configured to obtain a topographic map of a cleaning region, wherein the topographic map identifies an obstacle in the cleaning region;
a first determining module (402) configured to, based on the topographic map, determine an unclean region in the cleaning region, wherein the unclean region is occupied by the obstacle;
**characterised by**:
a detecting module (403) configured to detect the unclean region regularly according to a preset time interval to determine whether the obstacle placed on the unclean region is removed away; and
a cleaning module (404) configured to, if detecting that the obstacle at the unclean region is removed, clean the unclean region,
wherein the device (40), further comprising:
a second determining module (405) configured to determine whether the obstacle is temporary based on a bottom area of the obstacle;
wherein the detecting module (403) comprises:
a detecting sub-module (4031) configured to, if the obstacle is temporary, detect the unclean region according to the preset time interval to determine whether the obstacle placed on the unclean region is removed away.

6. The device (40) of claim 5, wherein the second determining module (405) comprises:
a first determining sub-module (4051) configured to determine whether or not the bottom area of the obstacle is smaller than or equal to a preset area threshold; and
a confirming sub-module (4052) configured to, if the bottom area of the obstacle is smaller than or equal to the preset area threshold, confirm the obstacle as the temporary.

7. The device (40) of claim 5, wherein the second determining module (405) comprises:
an obtaining sub-module (4053) configured to obtain information about the obstacle according to the bottom area of the obstacle; and
a second determining sub-module (4054) configured to determine an attribute of the obstacle according to a correspondence relationship between obstacles and obstacle attributes, wherein the obstacle attributes indicate whether the obstacles are temporary furniture or fixed.

8. The device (40) of any one of claims 5 to 7, further comprising:
a marking module (406) configured to, after the unclean region has been cleaned, mark the unclean region as a cleaned region.

9. A timed cleaning device (50) comprising:
a processor (520), and
a memory (504) storing instructions executable by the processor (520),
wherein the processor (520) is configured to perform steps of the method according to any one of claims 1 to 4.

10. A computer-readable storage medium including a set of instructions stored therein, which when executed by a processor (520), causes the processor (520) to perform steps of the method according to any one of claims 1 to 4.

## Patentansprüche

1. Zeitgesteuertes Reinigungsverfahren, das umfasst:
Erhalten (101) einer topografischen Karte einer Reinigungsregion, wobei die topografische Karte ein Hindernis in der Reinigungsregion identifiziert;
auf der Basis der topografischen Karte Bestimmen (102) einer ungereinigten Region in der Reinigungsregion, wobei die ungereinigte Region von dem Hindernis eingenommen ist;
**gekennzeichnet durch**:
regelmäßiges Detektieren (103) der ungereinigten Region entsprechend einem voreingestellten Zeitintervall zum Bestimmen, ob das in der ungereinigten Region platzierte Hindernis entfernt worden ist; und
wenn detektiert wird, dass das Hindernis in der ungereinigten Region entfernt worden ist, Reinigen (104) der ungereinigten Region,
wobei das Verfahren ferner umfasst:
Bestimmen (105) auf der Basis eines Bodenbereichs des Hindernisses, ob das Hindernis temporär ist;
wobei das Detektieren (103) der ungereinigten Region entsprechend dem voreingestellten Zeitintervall zum Bestimmen, ob das in der ungereinigten Region platzierte Hindernis entfernt worden ist, umfasst:
wenn das Hindernis temporär ist, Detektieren (1031) der ungereinigten Region entsprechend dem voreingestellten Zeitintervall zum Bestimmen, ob das in der ungereinigten Region platzierte Hindernis entfernt worden ist.

2. Verfahren nach Anspruch 1, bei dem das Bestimmen (105) auf der Basis des Bodenbereichs des Hindernisses, ob das Hindernis temporär ist, umfasst:
Bestimmen (1051), ob der Bodenbereich des Hindernisses kleiner als ein oder gleich einem voreingestellten Bereichs-Schwellwert ist oder nicht; und
wenn der Bodenbereich des Hindernisses kleiner als der oder gleich dem voreingestellten Bereichs-Schwellwert ist, Bestätigen (1052) des Hindernisses als temporär.

3. Verfahren nach Anspruch 1, bei dem das Bestimmen (105) auf der Basis des Bodenbereichs des Hindernisses, ob das Hindernis temporär ist, umfasst:
Erhalten (1053) von Informationen über das Hindernis entsprechend dem Bodenbereich des Hindernisses; und
Bestimmen (1054) eines Attributs des Hindernisses entsprechend einer Korrespondenzbeziehung zwischen Hindernissen und Hindernisattributen, wobei die Hindernisattribute anzeigen, ob die Hindernisse temporär oder dauerhaft sind.

4. Verfahren nach einem der Ansprüche 1 bis 3, das ferner umfasst:
nach dem Reinigen der ungereinigten Region Markieren der ungereinigten Region als gereinigte Region.

5. Vorrichtung (40) zum zeitgesteuerten Reinigen, die aufweist:
ein Erhaltemodul (401), das derart ausgebildet ist, dass es eine topografische Karte einer Reinigungsregion erhält, wobei die topografische Karte ein Hindernis in der Reinigungsregion identifiziert;
ein erstes Bestimmungsmodul (402), das derart ausgebildet ist, dass es auf der Basis der topografischen Karte eine ungereinigte Region in der Reinigungsregion bestimmt, wobei die ungereinigte Region von dem Hindernis eingenommen ist;
**gekennzeichnet durch**:
ein Detektiermodul (403), das derart ausgebildet ist, dass es die ungereinigte Region regelmäßig entsprechend einem voreingestellten Zeitintervall detektiert, um zu bestimmen, ob das in der ungereinigten Region platzierte Hindernis entfernt worden ist; und
ein Reinigungsmodul (404), das derart ausgebildet ist, dass es dann, wenn detektiert wird, dass das Hindernis in der ungereinigten Region entfernt worden ist, die ungereinigte Region reinigt,
wobei Vorrichtung (40) ferner aufweist:
ein zweites Bestimmungsmodul (405), das derart ausgebildet ist, dass es auf der Basis eines Bodenbereichs des Hindernisses bestimmt, ob das Hindernis temporär ist;
wobei das Dektiermodul (403) aufweist:
ein Detektiersubmodul (4031), das derart ausgebildet ist, dass es dann, wenn das Hindernis temporär ist, die ungereinigte Region entsprechend dem voreingestellten Zeitintervall detektiert, um zu bestimmen, ob das in der ungereinigten Region platzierte Hindernis entfernt worden ist.

6. Vorrichtung (40) nach Anspruch 5, bei der das zweite Bestimmungsmodul (405) aufweist:
ein erstes Bestimmungssubmodul (4051), das derart ausgebildet ist, dass es bestimmt, ob der Bodenbereich des Hindernisses kleiner als ein oder gleich einem voreingestellten Bereichs-Schwellwert ist oder nicht; und
ein Bestätigungssubmodul (4052), das derart ausgebildet ist, dass es dann, wenn der Bodenbereich des Hindernisses kleiner als der oder gleich dem voreingestellten Bereichs-Schwellwert ist, das Hindernis als temporär bestätigt.

7. Vorrichtung (40) nach Anspruch 5, bei der das zweite Bestimmungsmodul (405) aufweist:
ein Erhaltesubmodul (4053), das derart ausgebildet ist, dass es Informationen über das Hindernis entsprechend dem Bodenbereich des Hindernisses erhält; und
ein zweites Bestimmungssubmodul (4054), das derart ausgebildet ist, dass es ein Attribut des Hindernisses entsprechend einer Korrespondenzbeziehung zwischen Hindernissen und Hindernisattributen bestimmt, wobei die Hindernisattribute anzeigen, ob die Hindernisse eine temporäre Ausstattung oder dauerhaft sind.

8. Vorrichtung (40) nach einem der Ansprüche 5 bis 7, die ferner aufweist:
ein Markiermodul (406), das derart ausgebildet ist, dass es nach der Reinigung der ungereinigten Region die ungereinigte Region als gereinigte Region markiert.

9. Vorrichtung (50) zum zeitgesteuerten Reinigen, die aufweist:
einen Prozessor (520), und
einen Speicher (504), in dem von dem Prozessor (520) ausführbare Anweisungen gespeichert sind,
wobei der Prozessor (520) derart ausgebildet ist, dass er die Schritte des Verfahrens nach einem der Ansprüche 1 bis 4 durchführt.

10. Computerlesbares Speichermedium, das einen darin gespeicherten Satz von Anweisungen aufweist, die bei Ausführung durch einen Prozessor (520) bewirken, dass der Prozessor (520) die Schritte des Verfahrens nach einem der Ansprüche 1 bis 4 durchführt.

## Revendications

1. Procédé de nettoyage temporisé, comprenant le fait de:
obtenir (101) une carte topographique d'une région de nettoyage, où la carte topographique identifie un obstacle dans la région de nettoyage;
sur base de la carte topographique, déterminer (102) une région sale dans la région de nettoyage, où la région sale est occupée par l'obstacle;
**caractérisé par** le fait de:
détecter (103) la région sale de manière régulière selon un intervalle de temps préréglé pour déterminer si l'obstacle placé sur la région sale est éliminé; et
s'il est détecté que l'obstacle de la région sale est éliminé, nettoyer (104) la région sale,
dans lequel le procédé comprend par ailleurs le fait de:
déterminer (105) si l'obstacle est temporaire, sur base d'une zone de fond de l'obstacle;
dans lequel la détection (103) de la région sale selon l'intervalle de temps préréglé pour déterminer si l'obstacle placé sur la région sale est éliminé comprend le fait de:
si l'obstacle est temporaire, détecter (1031) la région sale selon l'intervalle de temps préréglé pour déterminer si l'obstacle placé sur la région sale est éliminé.

2. Procédé selon la revendication 1, dans lequel la détermination (105) de si l'obstacle est temporaire, sur base de la zone de fond de l'obstacle, comprend le fait de:
déterminer (1051) si la zone de fond de l'obstacle est ou non plus petite que ou égale à un seuil de zone préréglé; et
si la zone de fond de l'obstacle est plus petite que ou égale au seuil de zone préréglé, confirmer (1052) l'obstacle comme temporaire.

3. Procédé selon la revendication 1, dans lequel la détermination (105) de si l'obstacle est temporaire, sur base de la zone de fond de l'obstacle, comprend le fait de:
obtenir (1053) des informations sur l'obstacle selon la zone de fond de l'obstacle; et
déterminer (1054) un attribut de l'obstacle selon un rapport de correspondance entre les obstacles et les attributs d'obstacle, où les attributs d'obstacle indiquent si les obstacles sont temporaires ou fixes.

4. Procédé selon l'une quelconque des revendications 1 à 3, comprenant par ailleurs le fait de:
après que la région sale la été nettoyée, marquer la région sale comme région nettoyée.

5. Dispositif de nettoyage temporisé (40), comprenant:
un module d'obtention (401) configuré pour obtenir une carte topographique d'une région de nettoyage, où la carte topographique identifie un obstacle dans la région de nettoyage;
un premier module de détermination (402) configuré pour déterminer, sur base de la carte topographique, une région sale dans la région de nettoyage, où la région sale est occupée par l'obstacle;
**caractérisé par**:
un module de détection (403) configuré pour détecter la région sale de manière régulière selon un intervalle de temps préréglé pour déterminer si l'obstacle placé sur la région sale est éliminé; et
un module de nettoyage (404) configuré pour nettoyer, s'il détecte que l'obstacle de la région sale est éliminé, la région sale,
dans lequel le dispositif (40) comprend par ailleurs:
un deuxième module de détermination (405) configuré pour déterminer si l'obstacle est temporaire, sur base d'une zone de fond de l'obstacle;
dans lequel le module de détection (403) comprend:
un sous-module de détection (4031) configuré pour détecter, si l'obstacle est temporaire, la région sale selon l'intervalle de temps préréglé pour déterminer si l'obstacle placé sur la région sale est éliminé.

6. Dispositif (40) selon la revendication 5, dans lequel le deuxième module de détermination (405) comprend:
un premier sous-module de détermination (4051) configuré pour déterminer si la zone de fond de l'obstacle est ou non plus petite que ou égale à un seuil de zone préréglé; et
un sous-module de confirmation (4052) configuré pour confirmer, si la zone de fond de l'obstacle est plus petite que ou égale au seuil de zone préréglée, l'obstacle comme temporaire.

7. Dispositif (40) selon la revendication 5, dans lequel le deuxième module de détermination (405) comprend:
un sous-module d'obtention (4053) configuré pour obtenir des informations sur l'obstacle selon la zone de fond de l'obstacle; et
un deuxième sous-module de détermination (4054) configuré pour déterminer un attribut de l'obstacle selon un rapport de correspondance entre les obstacles et les attributs d'obstacle, où les attributs d'obstacle indiquent si les obstacles sont des meubles temporaires ou fixes.

8. Dispositif (40) selon l'une quelconque des revendications 5 à 7, comprenant par ailleurs:
un module de marquage (406) configuré pour marquer, après que la région sale a été nettoyée, la région sale comme une région nettoyée.

9. Dispositif de nettoyage temporisé (50), comprenant:
un processeur (520), et
une mémoire (504) mémorisant des instructions pouvant être exécutées par le processeur (520),
dans lequel le processeur (520) est configuré pour réaliser les étapes du procédé selon l'une quelconque des revendications 1 à 4.

10. Support de mémoire lisible par ordinateur, comportant un ensemble d'instructions mémorisées sur ce dernier qui, lorsqu'elles sont exécutées par un processeur (520), font que le processeur (520) réalise les étapes du procédé selon l'une quelconque des revendications 1 à 4.
